(19) Europäisches Patentamt

European Patent Office

Office européen des brevets

(11) EP 0 809 089 A2

(12) **EUROPÄISCHE PATENTANMELDUNG**

(43) Veröffentlichungstag:
26.11.1997 Patentblatt 1997/48

(51) Int. Cl.⁶: $G01F\ 1/60$

(21) Anmeldenummer: 97107796.1

(22) Anmeldetag: 13.05.1997

(84) Benannte Vertragsstaaten:
**CH DE DK FR GB IT LI NL**

(30) Priorität: 24.05.1996 DE 19621132

(71) Anmelder:
**Bailey-Fischer & Porter GmbH**
**37079 Göttingen (DE)**

(72) Erfinder:
• **Herwig, Jörg**
**37139 Adelebsen/Wibbecke (DE)**
• **Schäfer, Klaus**
**34346 Hann. Münden (DE)**

(74) Vertreter:
**Tiesmeyer, Johannes, Dipl.-Phys. Dr. et al**
**Kopernikusstrasse 9**
**81679 München (DE)**

(54) **Verfahren und Vorrichtung zur magnetisch-induktiven Durchflussmessung**

(57)    Es wird ein Verfahren und eine Vorrichtung zur magnetisch-induktiven Durchflußmessung mit getaktetem bzw. getaktet umgepoltem Gleichfeld vorgeschlagen. Die Besonderheit des Verfahrens liegt darin, daß die aufgrund der quer zu dem Magnetfeld verlaufenden Strömung des Meßmediums im Meßrohr des magnetisch-induktiven Durchflußmessers induzierte Meßspannung in jedem Taktzeitintervall eingeschalteten Spulenstroms bereits abgetastet wird, wenn das Magnetfeld seinen stationären Zustand noch nicht erreicht hat. Die Abtastwerte werden unter Verwendung empirisch ermittelter Korrekturfaktoren auf den Fall der Messung bei stationärem Magnetfeld hochgerechnet.

Eine bevorzugte Variante des Verfahrens sieht vor, daß von Zeit zu Zeit Kalibrierungsmeßwerte bei stationärem Magnetfeld aufgenommen werden, um die Korrekturfaktoren zu überprüfen und ggf. zu korrigieren. Eine weitere Ausgestaltung des Verfahrens sieht vor, daß der Spulenstrom mit zeitlich einander abwechselnden Frequenzen geschaltet wird, wobei die Anzahl der Perioden der einander abwechselnden Periodenzüge in unregelmäßiger Weise variiert wird. Gegenstand der Erfindung ist ferner ein magnetisch-induktiver Durchflußmesser zur Durchführung des Verfahrens.

Fig. 2

EP 0 809 089 A2

## Beschreibung

Die Erfindung betrifft ein Verfahren und eine Vorrichtung zur Messung der Durchflußrate eines fließfähigen Mediums nach dem Oberbegriff des Anspruchs 1 bzw. des Anspruchs 13.

Man unterscheidet im wesentlichen zwei Formen der Magnetfelderregung von magnetisch-induktiven Durchflußmessern, nämlich die Magnetfelderregung in Form eines getakteten oder geschalteten (bzw. getaktet umgepolten) Gleichfeldes und die Magnetfelderregung in Form eines sinusförmigen Wechselfeldes.

Die getaktete (bzw. getaktet umgepolte) Gleichfelderregung zeichnet sich dadurch aus, daß sich ein stabiler Nullpunkt und eine stabile Meßspanne des Meßsignals erzielen läßt. Aufgrund unvermeidlicher Induktivitäten und Verluste im Spulenerregerkreis stellt sich bei der getakteten Gleichfelderregung der jeweilige stationäre Wert $B_0$ des B-Feldes jedoch nicht unverzögert relativ zu den Erregerstromumschaltzeitpunkten ein, sondern erst nach Ablauf einer Anstiegszeit. Dieses Problem wurde bisher dadurch umgangen, daß man die Erregerstromumschaltfrequenz so klein gewählt hat, daß sich der stationäre Zustand des Magnetfeldes B in jedem Taktzeitintervall eingeschalteten Spulenstroms einstellen konnte und daß man die Meßspannung zwischen den Meßelektroden ausschließlich in den Zeitabschnitten stationären Magnetfeldes detektiert hat. Die jeweiligen Anstiegszeiten in den Taktzyklen eingeschalteten Spulenstroms werden dabei nicht zur Erfassung der Meßspannung ausgenutzt. Die Messung wird dort entsprechend ausgetastet.

Aus den vorstehend genannten Gründen waren die bisher nach dem Prinzip der Magnetfelderregung mit getaktetem bzw. getaktet umgepoltem Magnetfeld betriebenen magnetisch-induktiven Durchflußmesser vergleichsweise träge, so daß sich ihr Einsatzbereich im wesentlichen auf Standard-Durchflußmeßaufgaben, beispielsweise im Wasserversorgungs- und Abwasserbereich, beschränkt. Durchflußmessungen mit geschaltetem bzw. geschaltet umgepoltem Gleichfeld werden auch bereits zur Überwachung von relativ langsam ablaufenden Flüssigkeitsdosiervorgängen eingesetzt.

Der Betrieb von magnetisch-induktiven Durchflußmessern nach dem Prinzip der Magnetfelderregung in Form eines sinusförmigen, insbesondere netzsynchronen Wechselfeldes hat den Vorteil, daß die Meßspannung mit einer hohen Abtastrate ununterbrochen gemessen werden kann, so daß Durchflußänderungen vergleichsweise schnell erfaßt werden können. Derzeitige Einsatzbereiche für den Betrieb von magnetisch-induktiven Durchflußmessern mit sinusförmiger Wechselfelderregung sind beispielsweise die Überwachung von Kurzzeit-Dosiervorgängen, Durchflußmessungen mehrphasiger Meßstoffe, Papierstoffe und Fruchtgemische sowie Durchflußmessungen bei vergleichsweise stark schwankenden Durchflüssen, wie sie bei dem Betrieb mit Kolbenpumpen auftreten.

Bei magnetisch-induktiven Durchflußmessern mit sinusförmiger Wechselfeld-Magnetfelderregung tritt jedoch das Problem der Instabilität von Nullpunkt und Meßspanne und das Problem von Störungen durch netzsynchrone elektromagnetische Einströmungen auf.

Die vorliegende Erfindung bezieht sich auf den Betrieb von magnetisch-induktiven Durchflußmessern mit getakteter bzw. getaktet umgepolter Gleichfelderregung.

Aufgabe der Erfindung ist es, Wege aufzuzeigen, wie bei einem magnetisch-induktiven Durchflußmesser mit getakteter bzw. getaktet umgepolter Gleichfelderregung die verfügbaren Meßinformationen effizienter ausgenutzt werden können, um insbesondere höhere Auflösungen oder eine schnellere Reaktion des magnetisch-induktiven Durchflußmessers zu erzielen.

Zur Lösung dieser Aufgabe wird das Verfahren gemäß Anspruch 1 und der magnetisch-induktive Durchflußmesser gemäß Anspruch 13 vorgeschlagen.

Bei dem Verfahren gemäß Anspruch 1 wird in den jeweiligen Taktzeitintervallen eingeschalteten Spulenstroms bereits der Zeitabschnitt zur Aufnahme von Meßinformationen ausgenutzt, in dem das Magnetfeld seinen stationären Zustand noch nicht erreicht hat.

Die Abtastung der Meßspannung in den Taktzeitintervallen eingeschalteten Spulenstroms kann so gesteuert sein, daß in jedem Taktzeitintervall mehrere Abtastwerte der Meßspannung aufgenommen werden. Die Abtastwerte, die während der Zeitabschnitte detektiert werden, in denen das Magnetfeld seinen stationären Zustand noch nicht erreicht hat, können mittels Korrekturfaktoren korrigiert werden, um daraus die jeweilige Meßspannung für den Fall der Messung bei stationärem Magnetfeld hochzurechnen. Die Meßspannung bei stationärem Magnetfeld ist der zu ermittelnden Durchflußrate in guter Näherung proportional. Jedem im Zeitbereich des (noch) nicht stationären Magnetfeldes aufgenommenen Meßspannungswert ist ein Korrekturfaktor zugeordnet, der von dem Meßzeitpunkt des Meßwertes innerhalb des betreffenden Taktzeitintervalls eingeschalteten Spulenstroms abhängt. Die Korrekturfaktoren können beispielsweise durch Kalibrierungsmessungen bzw. Systemparametermessungen bestimmt und in einem Speicher einer Auswerteeinrichtung bereitgehalten werden.

Der vorstehend erläuterte Meßmodus erlaubt eine vergleichsweise hohe Abtastrate, wobei jedes Taktzeitintervall eingeschalteten Spulenstroms im wesentlichen vollständig für die Aufnahme von Meßwerten ausgenutzt werden kann. Das betreffende Meßsystem kann relativ schnell auf Durchflußänderungen reagieren, so daß sich Anwendungen erschließen, die bisher dem Meßbetrieb mit sinusförmiger Wechselfeldanregung vorbehalten waren.

Es sei darauf hingewiesen, daß insbesondere bei getaktet umgepolter Gleichfelderregung, bei der die Richtung des Magnetfeldes wechselweise umgekehrt wird, mit Spulenerregerstrom-Taktzeitintervallen gearbeitet werden kann, die kürzer sind als die Anstiegszeit, die das Magnetfeld zum Erreichen des stationären Zustands benötigt. Die Spulenerregerstrom-Umschaltfrequenz kann daher gegenüber konventionellen magnetisch-induktiven Durchflußmessern entsprechend erhöht werden.

Ein anderer Meßmodus nach dem erfindungsgemäßen Verfahren sieht vor, daß in jedem Taktzeitintervall eingeschalteten Spulenstroms lediglich ein Spannungsmeßwert erfaßt wird, dessen Abtastintegrationszeitintervall (Meßzeitfenster) jedoch so groß ist, daß es vorzugsweise nahezu den gesamten Zeitbereich des betreffenden Taktzeitintervalls überdeckt. Zur Abschätzung der Meßspannung für den Fall der Messung bei stationärem Magnetfeld werden die betreffenden Meßwerte mit Korrekturfaktoren normiert bzw. korrigiert, wobei die Korrekturfaktoren von der Breite des Abtastintegrationszeitintervalls (Meßzeitfensters) und der relativen Lage des Abtastintegrationszeitintervalls innerhalb der betreffenden Taktzeitintervalle abhängen. Auch bei dem letztgenannten Meßmodus ist es nicht notwendig, daß die Taktzeitintervalle eingeschalteten Spulenstroms jeweils so lang gewählt sind, daß das Magnetfeld seinen stationären Zustand erreicht.

Gemäß einer Weiterbildung des Verfahrens wird der Spulenerregerstrom mit wenigstens zwei einander abwechselnden Umschaltfrequenzen geschaltet, wobei die Taktzeitintervalle bei einer dieser Frequenzen hinreichend lang sind, um ein stationäres Magnetfeld aufzubauen. In diesen (längeren) Taktzeitintervallen wird die Meßspannung im Zustand des stationären Magnetfeldes aufgenommen, um Kalibrierungswerte bereitzustellen, mit denen die oben genannten Korrekturfaktoren überprüft und ggf. korrigiert werden können. Weichen die unter Verwendung der Korrekturfaktoren abgeschätzten Meßspannungswerte über eine vorbestimmte Zeit systematisch von den entsprechenden Kalibrierungswerten ab, so erfolgt eine Korrektur der Korrekturfaktoren, um die Abschätzungen zu verbessern.

Bei der Messung mit jeweils einem Abtastwert pro Taktzeitintervall eingeschalteten Spulenstroms kann die Gewinnung von entsprechenden Kalibrierungswerten dadurch erfolgen, daß man in hinreichend langen Taktzeitintervallen das Abtastintegrationszeitintervall für die Meßwertaufnahme verkleinert und ausschließlich in den Zeitbereich legt, in dem das Magnetfeld seinen stationären Zustand erreicht hat.

Besondere Bedeutung im Rahmen der Erfindung kommt dem Verfahren nach Anspruch 9 zu, bei dem man den Spulenerregerstrom mit wenigstens zwei verschiedenen, zeitlich einander abwechselnden Umschaltfrequenzen schaltet und die Meßspannung in vorbestimmter zeitlicher Beziehung zum jeweils vorausgehenden Spulenerregerstrom-Umschaltzeitpunkt in den Taktzeitintervallen eingeschalteten Spulenstroms abtastet. Als Besonderheit kommt hinzu, daß man die Anzahl der Perioden in den Periodenzügen der einander abwechselnden Umschaltfrequenzen in unregelmäßiger Weise variiert. Diesem Gesichtspunkt kommt im Rahmen der Erfindung selbständige Bedeutung zu.

Das Meßverfahren nach Anspruch 9 eignet sich insbesondere zum Einsatz bei periodisch schwankenden Durchflüssen, wie sie etwa von Kolbenpumpen oder dgl. im Förderkreis des fließfähigen Mediums hervorgerufen werden können.

Wird nämlich ein periodisch pulsierender Durchflußverlauf mit einer konstanten Frequenz (oder zwei einander periodisch abwechselnden festen Frequenzen) abgetastet, so kann es bei zeitlicher Synchronisation von Meßwertabtastung und periodischer Durchflußänderung zu einem Schwebungsverhalten und somit zu einem systematischen Fehler des vorzugsweise eine mittlere Durchflußrate indizierenden Ausgangssignals (ein über mehrere Abtastwerte gemittelten Signals) eines magnetisch-induktiven Durchflußmessers kommen.

Bei dem erfindungsgemäßen Meßbetrieb nach Anspruch 9 ist gewährleistet, daß sich die Meßwerterfassung niemals über längere Zeit auf periodische Durchflußänderungen synchronisiert, so daß systematische Fehlmessungen aufgrund von Schwebungseffekten vermieden werden.

Vorzugsweise werden zwei Frequenzen gewählt, die keine gemeinsamen Harmonischen haben.

Die Anzahl der jeweiligen Perioden in den einander abwechselnden Periodenzyklen der verschiedenen Umschaltfrequenzen kann beispielsweise mittels eines Zufallszahlengenerators aus einem vorgegebenen Zahlenbereich statistisch ausgewählt werden.

Zur Durchführung des erfindungsgemäßen Verfahrens wird ein magnetisch-induktiver Durchflußmesser mit den Merkmalen des anspruchs 13 vorgeschlagen. Der erfindungsgemäße Durchflußmesser erlaubt es, die Abtastintegrationszeitintervalle des Meßwertintegrators in den Anstiegszeitbereich des Magnetfelds zu legen oder ggf. kontinuierlich auszudehnen und somit auch die Informationen auszunutzen, die die Meßspannung bereits vor Erreichen des stationären Zustands des Magnetfeldes birgt.

Bevorzugte Weiterbildungen des erfindungsgemäßen Durchflußmessers sind in den Ansprüchen 14 bis 23 angegeben.

Die Erfindung wird nachstehend anhand der Figuren näher erläutert.

Fig. 1 zeigt in einem Blockschaltbild einen magnetisch-induktiven Durchflußmesser nach der Erfindung.

Fig. 2 zeigt in einem vereinfachten Diagramm ein charakteristisches Zeitverhalten der Meßspannung und des Magnetfeldes in den Taktzeitintervallen eingeschalteten Spulenstroms und die Möglichkeit der mehrfachen Abtastung der Meßspannung in dem Taktzeitintervall.

Fig. 3 zeigt in einem Erläuterungsdiagramm den Verlauf der Meßspannung bei getaktet umgepolter Gleichfelderregung und die Möglichkeit der mehrfachen Abtastung pro Erregerstromtaktzeitintervall.

Fig. 4 zeigt in einem Erläuterungsdiagramm den zeitlichen Verlauf der Meßspannung und die Möglichkeit der Einzelabtastung jedes Taktzeitintervalls mit einem breiten Abtastintegrationszeitintervall.

Fig. 5 zeigt in einem Erläuterungsdiagramm den Verlauf der Meßspannung bei Erregung des Magnetfeldes mit zwei einander abwechselnden Erregungsfrequenzen und die Möglichkeit der Aufnahme von Kalibrierungswerten.

Fig. 6 zeigt in einem Erläuterungsdiagramm den zeitlichen Verlauf der Meßspannung bei Magnetfelderregung mit zwei verschiedenen, einander abwechselnden Frequenzen, wobei die Anzahl der Perioden in den jeweiligen Periodenzyklen in unregelmäßiger Weise variiert.

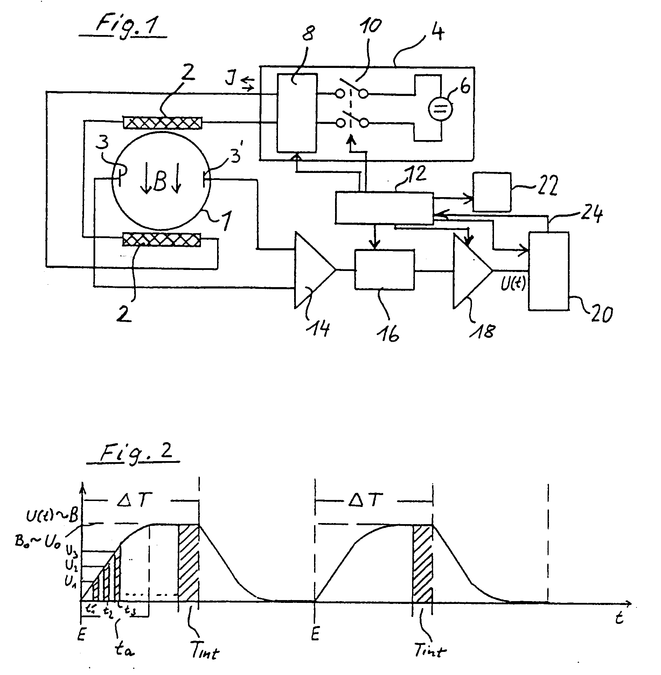

Fig. 1 zeigt in einem Blockschaltbild einen magnetisch-induktiven Durchflußmesser nach der Erfindung. Der Durchflußmesser weist ein Meßrohr 1, eine elektromagnetische Spulenanordnung 2 zur Erzeugung eines das Meßrohr 1 durchsetzenden Magnetfeldes (Induktionsflußdichte B) sowie ein Meßelektrodenpaar 3, 3' auf, welches mit dem zumindest in einem geringfügigen Maße elektrisch leitfähigen, das Meßrohr 1 durchströmenden Medium galvanisch in Kontakt steht. Die Baugruppe 1, 2, 3, 3' ist von herkömmlicher Bauart. Aufgrund der quer zu dem Magnetfeld verlaufenden Strömung des fließfähigen Mediums wird eine Meßspannung induziert, die über die Elektroden 3, 3' abgegriffen werden kann.

Im Falle eines stationären B-Feldes ist die an den Elektroden 3, 3' abgegriffene Meßspannung der Durchflußrate Q des fließfähigen Mediums in dem Rohr 1 in guter Näherung direkt proportional.

Messungen mit über längere Zeit stationärem B-Feld sind jedoch störanfällig. Magnetisch-induktive Durchflußmesser werden daher häufig mit einem getakteten bzw. geschalteten Gleichfeld betrieben, wobei der Treiberstrom J für die Spulenanordnung periodisch ein- und ausgeschaltet bzw. umgepolt wird, um das Magnetfeld entsprechend ein- und auszuschalten bzw. in seiner Richtung umzukehren.

Von dem Prinzip des getakteten Magnetfeldes macht auch die vorliegende Erfindung Gebrauch.

Bei dem in Fig. 1 dargestellten Durchflußmesser ist die Spulenanordnung 2 an einer steuerbaren Treiberschaltung 4 angeschlossen, die den Erregerstrom I für die Spulenanordnung 2 liefert. Die Treiberschaltung 4 enthält eine Gleichstromquelle 6 für die Spulenanordnung 2, eine aus der Gleichstromquelle 6 gespeiste, steuerbare Umpol-Brückenschaltung 8 zur wahlweisen Änderung der Stromflußrichtung des Spulenstroms I und einen steuerbaren Ein/Aus-Schalter 10 zur wahlweisen Unterbrechung des Spulenstromes I.

Die Treiberschaltung 4 ist an einer Steuer- und Auswerteeinrichtung 12 angeschlossen, welche die Funktionen der Umpol-Brückenschaltung 8 und der Schalteinrichtung 10 in programmierter bzw. programmierbarer Weise mikroprozessorgesteuert kontrolliert. Die Steuer- und Auswerteeinrichtung 12 in Verbindung mit der Treiberschaltung 4 kontrolliert somit das Ein- und Ausschalten des Magnetfeldes B, die Dauer der Zustände: Magnetfeld eingeschaltet bzw. Magnetfeld ausgeschaltet und die Richtung des Magnetfeldes im Meßrohr 1.

Auf der Meßwerterfassungs- und -auswertungsseite weist der Durchflußmesser gemäß Fig. 1 einen an den Meßelektroden 3, 3' angeschlossenen Eingangsverstärker 14, ein dem Eingangsverstärker 14 nachgeschaltetes Tiefpaßfilter 16 mit wahlweise programmierbarer Grenzfrequenz, einen dem Tiefpaßfilter 16 nachgeschalteten Analogverstärker 18, eine dem Analogverstärker 18 nachgeschaltete Meßwertintegrationsstufe 20 mit einstellbarem Abtastintegrationszeitintervall, die Steuer- und Auswerteeinrichtung 12 und eine Anzeigeeinheit 22 auf. Die Steuer- und Auswerteeinrichtung 12 kontrolliert die einstellbare Grenzfrequenz des Filters 16 sowie die Verstärkung des Analogverstärkers 18. Die Steuer- und Auswerteeinrichtung 12 ist ferner dazu eingerichtet, die Dauer der Abtastintegrationszeitintervalle des Meßwertintegrators 20 und die zeitliche Lage der Abtastintegrationszeitintervalle relativ zu Schalterereignissen der Treiberschaltung 4 zu kontrollieren.

Die Steuer- und Auswerteeinrichtung 12 erhält über die Datenleitung 24 digitalisierte Meßwerte von dem Meßwertintegrator 20. Eine Auswertroutine der Steuer- und Auswerteeinrichtung 12 wertet die digitalen Meßwerte des Meßwertintegrators 20 zur Bestimmung von Durchflußratenwerten aus und zeigt die ggf. gemittelte Durchflußrate mittels der Anzeige 22 an.

Das am Eingang des Meßwertintegrators 20 anliegende Spannungssignal U(t) entspricht der von dem Filter 16 von höherfrequenten Störungen befreiten und durch den Verstärker 18 nachverstärkten Detektionsspannung zwischen den Meßelektroden 3, 3'.

Zur weiteren Erläuterung der Erfindung wird nachstehend zunächst auf Fig. 2 Bezug genommen.

Fig. 2 zeigt qualitativ das zeitliche Verhalten des Magnetfeldes B für den Fall, daß der Spulenstrom periodisch ein- und ausgeschaltet wird. Für den Fall einer konstanten Durchflußrate des Meßmediums entspricht der zeitliche Verlauf der an dem Meßwertintegrator 20 anliegenden Spannung U(t) qualitativ dem zeitlichen Verlauf des B-Feldes. Aufgrund unvermeidlicher Induktivitäten und Verluste im Spulenerregerkreis stellt sich der stationäre Wert $B_0$ des B-Feldes nicht unverzögert relativ zu den Stromeinschaltzeitpunkten E ein, sondern erst nach Ablauf einer Anstiegszeit $t_a$. Wie erwähnt, verhält sich die an dem Meßwertintegrator 20 anliegende Detektionsspannung U(t) bei konstanter Durchflußrate entsprechend.

Um das Problem der endlichen Einstellzeit des stationären Magnetfeldes innerhalb der Taktzyklen $\Delta T$ eingeschalteten Spulenstroms zu umgehen, hat man bisher die Einschalttaktzyklen $\Delta T$ hinreichend lang gewählt, so daß B und somit U(t) den stationären Zustand $B_0$ bzw. $U_0$ erreichen konnte. Die Registrierung der Meßspannung erfolgte dann jeweils am Ende der Taktzyklen $\Delta T$ eingeschalteten Spulenstroms über ein Abtastintegrationszeitintervall $T_{int}$, wie dies in Fig. 2 angedeutet ist. Bei dieser konventionellen Vorgehensweise ist die Taktfrequenz des Magnetfeldes ersichtlicherweise dadurch begrenzt, daß in jedem Taktzyklus das Erreichen des stationären Zustandes abgewartet werden muß. Ferner wird nur ein begrenzter Zeitabschnitt $T_{int}$ in jedem Taktzyklus $\Delta T$ für die eigentliche Meßwerterfassung ausgenutzt.

Der Erfindung liegt die Idee zugrunde, Meßinformationen aus der Detektionsspannung U(t) bereits in dem Zeitbereich ta zu gewinnen und auszuwerten, in dem der stationäre Zustand des B-Feldes sich noch nicht eingestellt hat. Probemessungen bei konstanter Durchflußrate haben ergeben, daß sich das stationäre Magnetfeld und entsprechend auch die Detektionsspannung U(t) mit einem charakteristischen, von dem magnetischen Erregungssystem abhängigen Zeitverhalten aufbaut, das durch Kalibrierungs- bzw. Systemparametermessungen determinierbar ist.

Ist das prinzipielle Zeitverhalten B(t) des Aufbaus des stationären Feldes $B_0$ und dementsprechend das Zeitverhalten U(t) des Aufbaus der stationären Spannung $U_0$ bekannt, so können bereits während der Anstiegszeit $t_a$ zu bestimmten Zeiten $t_i$ aufgenommene Meßwerte $U_i$ der Spannung U(+) für die Bestimmung der Durchflußrate des fließfähigen Mediums in dem Meßrohr 1 herangezogen werden. Stellt sich der stationäre Wert $U_0$ der Meßspannung beispielsweise entsprechend der Sprungantwortfunktion eines linearen Systems erster Ordnung mit dem Zeitverhalten:

$$U(t) = U_0 \, (1-e^{-e/\tau})$$

in jedem Taktzyklus $\Delta T$ eingeschalteten Spulenstroms ein, so gilt für einen zum Zeitpunkt $t_i$ gemessenen Spannungswert $U_i$:

$$k_i U_i = U_0 \text{ mit}$$

$$k_i = 1/(1-e^{-ti/\tau}).$$

Bei bekannter Zeitkonstante $\tau$, die durch Systemparametermessungen ermittelt werden kann, sind den einzelnen Meßpunkten $t_i$ somit Korrekturfaktoren $k_i$ zugeordnet, die dazu herangezogen werden können, die jeweils gesuchten stationären Werte $U_0$, die der zu ermittelnden Durchflußrate in guter Näherung proportional sind, aus den zu den Zeitpunkten $t_i$ gemessenen Spannungswerten $U_i$ abzuschätzen.

Bei dem Durchflußmesser der vorliegenden Erfindung übernimmt die Steuer- und Auswerteeinrichtung 12 die Steuerung der zeitlichen Abläufe der Schaltung des Spulenerregerstroms und der Meßwertnahme und ferner die numerische Auswertung der Meßergebnisse. Sie legt insbesondere die Zeitpunkte $t_i$ der Meßwertnahmen durch den Meßwertintegrator 20 relativ zu den Umschaltzeitpunkten des Spulenerregerstromes I und die Dauer der jeweiligen Integrationszeitintervalle für die Aufnahme der Meßwerte $U_i$ programmgesteuert fest.

Der Durchflußmesser nach der Erfindung gemäß Fig. 1 erlaubt die Durchführung unterschiedlicher Meßmodi für die Durchflußratenbestimmung unter der Prämisse, daß die verfügbaren Meßinformationen besser ausgenutzt werden als bisher. Bevorzugte Meßmodi werden nachstehend erläutert.

## 1. Meßmodus 1

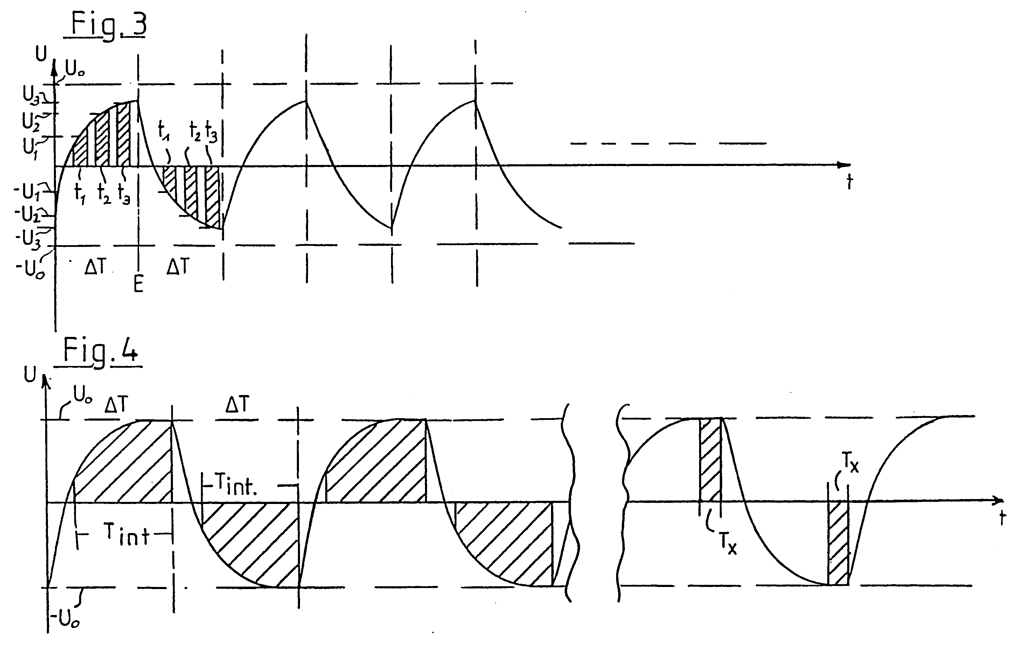

Die Steuer- und Auswerteeinrichtung 12 steuert die Umpol-Brückenschaltung 8 derart, daß die Stromrichtung des Spulenerregerstroms I periodisch mit einer Frequenz f von beispielsweise 25 Hz umgekehrt wird. Ein beispielhafter qualitativer Verlauf der dabei an dem Meßwertintegrator 20 anliegenden Spannung U(t) ist in Fig. 3 dargestellt. Im Fall der Fig. 3 sei die Umschaltfrequenz des Spurenerregerstroms I so hoch, daß die Spannung U(t) den stationären Zustand $U_0$ bzw. $-U_0$ nicht erreicht.

Der Meßwertintegrator 20 tastet die Spannung U(t) unter der Steuerung der Steuer- und Auswerteeinrichtung 12 zu den Zeitpunkten $t_1$, $t_2$ .... $t_n$ in jeder Halbperiode $\Delta T$ ab und gibt entsprechende digitalisierte Meßwerte $U_1$, $U_2$ .... $U_n$ über die Datenleitung 24 an die Steuer- und Auswerteeinrichtung 12 ab. In der Steuer- und Auswerteeinrichtung 12 sind Korrekturfaktoren $k_i$ gespeichert, die den betreffenden Meßzeitpunkt $t_i$ in der bereits oben beschriebenen Weise zugeordnet sind. Zur Auswertung werden die Meßwerte $U_1$, $U_2$ .... $U_n$ mit den betreffenden Korrekturfaktoren $k_1$, $k_2$ .... $k_n$ multipliziert, um betreffende Werte $U_{01}$, $U_{02}$ .... $U_{0n}$ abzuschätzen. Zur Abschätzung eines einheitlichen stationären Wertes $U_0$ bzw. $-U_0$ für die betreffende Halbperiode $\Delta T$ kann die Steuer- und Auswerteeinrichtung 12 aus den ermittelten Werten $U_{01}$ .... $U_{0n}$ einen Mittelwert bilden. Zur Eliminierung von Offset-Störungen ist die Steuer- und Auswerteeinrichtung 12 ferner in der Lage, den in jeder Periode $2\Delta T$ abgeschätzten Wert $-U_0$ von dem in der gleichen Periode abgeschätzten Wert $+U_0$ zu subtrahieren.

Wie aus Fig. 3 ersichtlich, werden die verfügbaren Meßinformationen ohne die bisherigen Wartezeiten konventioneller Durchflußmeßsysteme mit geschaltetem Gleichfeld optimal ausgenutzt. Da der stationäre Zustand des Magnetfeldes nach Umschalten des Spulenstroms nicht abgewartet werden muß, kann mit einer entsprechend höheren Stromumschaltfrequenz gearbeitet werden, was eine schnellere Reaktion des erfindungsgemäßen Durchflußmessers auf Durchflußänderungen möglich macht. Hierbei werden relativ genaue Meßergebnisse erhalten, wenn die Durchflußrate über wenigstens eine Periode $2\Delta T$ im wesentlichen konstant ist.

Die Korrekturfaktoren $k_i$ können mittels Kalibrierungsmessungen empirisch ermittelt werden und hängen von der jeweiligen Antwortfunktion des Erregungssystems für das Magnetfeld auf das Ein- und Ausschalten bzw. Umschalten des Spulenstroms hin ab.

Der Meßmodus 1 kann bei Bedarf auch mit einer geringeren Stromumschaltfrequenz betrieben werden, so daß sich in jeder Halbperiode $\Delta T$ der stationäre

Zustand des Magnetfeldes B und der Meßspannung U einstellen kann. Wenngleich in diesem Fall gegenüber herkömmlichen magnetisch-induktiven Durchflußmeßsystemen keine signifikante Verkürzung der Stromumschaltperioden 2ΔT vorliegt, so werden die verfügbaren Meßinformationen dennoch besser ausgenutzt, da bereits während der unvermeidlichen Anstiegszeit des Magnetfeldes B auswertbare Meßergebnisse erhalten werden. Die nach Erreichen des stationären Zustandes aufgenommenen Meßwerte $U_0$ können von der Steuer- und Auswerteeinrichtung 12 dazu herangezogen werden, die Korrekturwerte $k_i$ zu überprüfen und ggf. zu korrigieren bzw. zu aktualisieren, um beispielsweise Änderungen der Korrekturwerte $k_i$ aufgrund von Temperaturänderungen zu berücksichtigen.

Die entsprechend dem Meßmodus 1 aufgenommenen Meßwerte $U_i$ können auch in der nachstehend erläuterten alternativen Weise ausgewertet werden, um Ergebnisse über die Durchflußrate zu erhalten.

Bei dieser alternativen Auswertemethode führt die Steuer- und Auswerteeinrichtung im Wege der Ausgleichsrechnung eine Kurvenanpassung nach der Methode der kleinsten Fehlerquadrate unter Verwendung der Meßwerte $U_i$ durch. Folgt die Detektionsspannung $U(t)$ beispielsweise einer Funktion der algebraischen Form: $U(t) = U_0 (1-e^{-t/\tau})$, so kann durch eine derartige bestfit-Rechnung nicht nur der Parameter $\tau$ (Zeitkonstante) sondern auch der gesuchte Wert $U_0$ optimal abgeschätzt werden.

Es sei jedoch darauf hingewiesen, daß auch diese Auswertevariante bei anderen Systemantwortfunktionen als der vorstehend beispielhaft angegebenen funktioniert, sofern die allgemeine algebraische Form bekannt ist.

2. Meßmodus

Der unter Bezugnahme auf Fig. 4 erläuterte zweite Meßmodus unterscheidet sich hinsichtlich der zeitlichen Steuerung des Magnetfeldes B nicht von dem unter Bezugnahme auf Fig. 3 erläuterten ersten Meßmodus. Im Unterschied zum ersten Meßmodus wird der Spannungsverlauf $U(t)$ jedoch nicht mit mehreren Meßwerten pro Halbperiode ΔT abgetastet, sondern es wird pro Halbperiode ΔT jeweils ein Meßwert U aufgenommen, wobei jedoch ein sehr breites Abtastintegrationszeitintervall $T_{int}$ für die Integration der betreffenden Meßwerte gewählt wird. Da sich das Abtastintegrationszeitintervall $T_{int}$ (auch) über einen Bereich der Anstiegszeit ta erstreckt, in der die Spannung U den stationären Wert $U_0$ noch nicht erreicht hat, sind die betreffenden Meßwerte U mit einem Korrekturfaktor zu korrigieren, um den Wert $U_0$ abzuschätzen. Der betreffende Korrekturfaktor k hängt von der Breite des Abtastintegrationszeitintervalls $T_{int}$ und von der relativen Lage des Abtastintegrationszeitintervalls $T_{int}$ innerhalb der betreffenden Halbperiode ΔT ab und kann mittels Kalibrierungsmessung empirisch bestimmt werden. Entsprechende Korrekturfaktoren werden in einem Speicher der Steuer- und Auswerteeinrichtung 12 bereitgehalten.

Auch bei dem zweiten Meßmodus werden die verfügbaren Meßinformationen unter Vermeidung von Wartezeiten optimal ausgenutzt.

Sofern in dem zweiten Meßmodus mit einer Stromumschaltfrequenz gearbeitet wird, bei der die Detektionsspannung $U(t)$ den stationären Wert $U_0$ jeweils erreichen kann, wird vorgeschlagen, das Abtastintegrationszeitintervall $T_{int}$ von Zeit zu Zeit in einigen Perioden 2ΔT zu verkleinern und ausschließlich in den stationären Bereich zu legen, wie dies bei $T_x$ in Fig. 4 angedeutet ist. Die dabei ermittelten stationären Meßspannungswerte $U_0$ können dazu herangezogen werden, die vorstehend genannten Korrekturfaktoren k zu korrigieren bzw. zu aktualisieren, um etwaige Änderungen der Korrekturfaktoren, beispielsweise aufgrund von Änderungen der Temperatur, zu berücksichtigen. Eine solche Aktualisierung der Korrekturparameter findet dann statt, wenn die über mehrere Perioden mit dem Abtastintegrationszeitintervall $T_x$ gemessenen stationären Werte $U_0$ und die mit diesen Meßwerten $U_0$ korrespondierenden und unter Verwendung der k-Werte abgeschätzten $U_0$-Werte im wesentlichen konstant sind, jedoch voneinander abweichen.

3. Meßmodus

Der besonders bevorzugte dritte Meßmodus unterscheidet sich von dem ersten und zweiten Meßmodus dadurch, daß unter der Steuerung der Steuer- und Auswerteeinrichtung 12 die Umschaltfrequenz des Erregerstroms I periodisch zwischen zwei Frequenzwerten, beispielsweise $f_1 = 25$ Hz und $f_2 = 6,25$ Hz, wechselt.

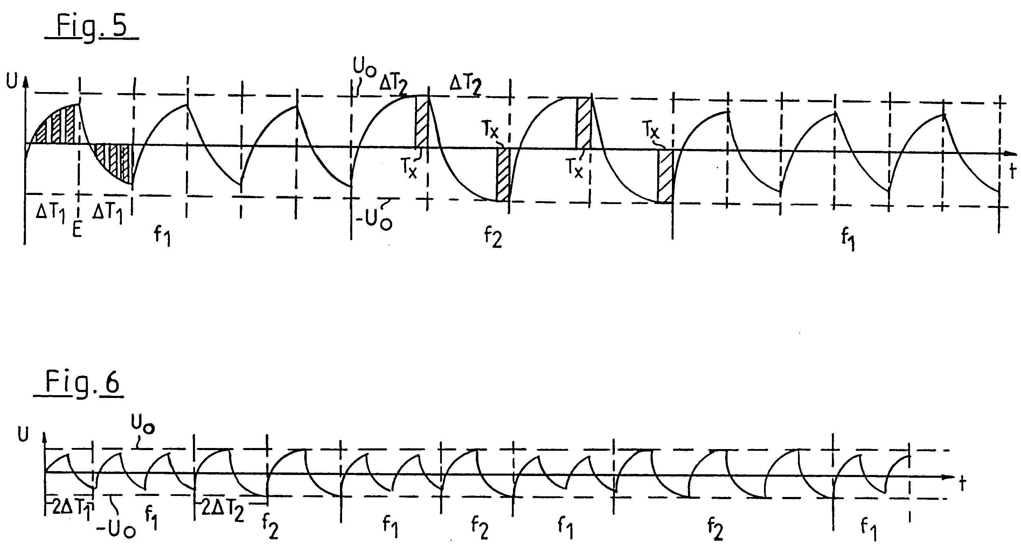

Dabei ergibt sich ein zeitlicher Verlauf der Detektionsspannung $U(t)$ am Eingang des Meßwertintegrators 20, wie er qualitativ in Fig. 5 skizziert ist. Wie aus Fig. 5 zu erkennen ist, sind die Stromumschaltperioden $2\Delta T_2$ bei der kleineren Frequenz $f_2$ so lang, daß die Spannung $U(t)$ jeweils ihren stationären Wert $U_0$ erreichen kann, wohingegen dies bei der höheren Frequenz $f_1$ nicht der Fall ist.

Die Meßwerterfassung mittels dem Meßwertintegrator 20 kann während der Phasen höherer Frequenz in der unter Bezugnahme auf den ersten Meßmodus oder in der unter Bezugnahme auf den zweiten Meßmodus beschriebenen Weise erfolgen. Während der längeren Stromumschaltperioden (Frequenz $f_2$) wird jedoch (zumindest auch) ein Spannungsmeßwert ausschließlich im stationären Bereich (vgl. Abtastintegrationszeitintervall $T_x$) aufgenommen. Sofern diese Kontrollwerte der stationären Spannung $U_0$ und die korrespondierenden Schätzwerte $U_0$ über einen längeren Zeitraum konstant, aber systematisch ungleich sind, werden die gemessenen Kontrollwerte $U_0$ zur Überprüfung der Korrekturwerte $k_i$ bzw. k herangezogen, die in der oben beschriebenen Weise zur Abschätzung der $U_0$-Werte aus den Messungen mit der höheren Stromumschaltfrequenz $f_1$ herangezogen werden. Ergibt sich also aus einem Vergleich der während der Frequenz $f_2$ jeweils im stationären Zustand gemessenen Werte $U_0$ mit den während der Meßphasen mit der Frequenz $f_1$ abgeschätzten Werten für $U_0$, daß die Korrekturfaktoren $k_i$ korrekturbedürftig sind, so aktualisiert die Steuer- und Auswerteeinrichtung 12 die Korrekturfaktoren $k_i$ entsprechend.

Im Ergebnis kann auf diese Weise die Meßspanne und der Nullpunkt der Messungen überprüft und ggf. korrigiert werden.

4. Meßmodus

Der unter Bezugnahme auf Fig. 6 erläuterte vierte Meßmodus wird ebenfalls mit wenigstens zwei im zeitlichen Verlauf einander abwechselnden Stromumschaltfrequenzen $f_1$, $f_2$ des Erregerstromes I betrieben. Die Frequenzen $f_1$ und $f_2$ haben untereinander keine gemeinsamen Oberwellen. Die höhere Frequenz $f_1$ kann so gewählt sein, daß sich in den zugehörigen Halbperioden stationäre Zustände des Magnetfeldes B einstellen können.

Besonderheit des Meßmodus Nr. 4 ist nun, daß die Zyklen kürzerer Perioden ($f_1$) und längerer Perioden ($f_2$) einander nicht regelmäßig periodisch abwechseln. Die Anzahl der Erregerzyklen beider Frequenzen wird mittels eines Zufallszahlengenerators der Steuer- und Auswerteeinrichtung 12 stochastisch bestimmt, wobei die maximale Anzahl aufeinanderfolgender Zyklen gleicher Frequenz einstellbar begrenzt ist.

Die Meßwerterfassung und -auswertung kann in dem vierten Meßmodus auf eine der vorstehend beschriebenen Arten oder ggf. auch durch ausschließliche Meßwertaufnahme in den jeweils stationären Bereichen erfolgen.

Die Magnetfelderregung entsprechend dem vierten Meßmodus hat besondere Vorteile bei der Messung von Durchflüssen, die periodische Durchflußschwankungen aufweisen, wie sie etwa von Kolbenpumpen oder dgl. im Förderkreis des fließfähigen Mediums hervorgerufen werden können.

Wird nämlich ein etwa periodisch pulsierender Durchflußverlauf mit einer festen Frequenz (oder mit zwei einander periodisch abwechselnden festen Frequenzen) abgetastet, so kann es bei zeitlicher Synchronisation von Meßwerterfassung und periodischer Durchflußänderung zu einem Schwebungsverhalten und somit zu einem systematischen Fehler des vorzugsweise eine mittlere Durchflußrate indizierenden Ausgangssignals eines magnetisch-induktiven Durchflußmessers kommen.

Bei dem erfindungsgemäßen Meßbetrieb entsprechend dem vierten Meßmodus ist gewährleistet, daß sich die Meßwerterfassung niemals über längere Zeit auf periodische Durchflußänderungen synchronisiert, so daß bleibende Fehlmessungen vermieden werden. Der nach dem vierten Meßmodus betriebene magnetisch-induktive Durchflußmesser nach der Erfindung gibt ein die mittlere Durchflußrate bei periodisch schwankenden Durchflüssen korrekt wiedergebendes Ergebnis aus.

**Patentansprüche**

1. Verfahren zur Messung der Durchflußrate eines fließfähigen Mediums mittels eines magnetisch-induktiven Durchflußmessers,
wobei man das fließfähige Medium durch ein Meßrohr (1) des magnetisch-induktiven Durchflußmessers leitet, ein das Meßrohr (1) im wesentlichen quer zu dessen Längsachse durchsetzendes, geschaltetes Magnetfeld mittels einer elektromagnetischen Spulenanordnung (2) des magnetisch-induktiven Durchflußmessers erzeugt, indem man die Spulenanordnung (2) mit einem Erregerstrom (I) aus einer getakteten Gleichstromquelle (4) betreibt und wobei man eine aufgrund der quer zu dem Magnetfeld verlaufenden Strömung des fließfähigen Mediums induzierte Meßspannung (U(t)) zwischen zwei Meßelektroden (3, 3') des magnetisch-induktiven Durchflußmessers in Taktzeitintervallen ($\Delta T$) eingeschalteten Spulenstroms mittels einer Meßwerterfassungseinrichtung (12-22) abtastet,
**dadurch gekennzeichnet,**
daß man die Meßspannung (U(t)) in Taktzeitintervallen ($\Delta T$) eingeschalteten Spulenstroms (I) bereits während eines Zeitabschnittes ($t_a$) abtastet, in dem das gemäß einer charakteristischen Zeitabhängigkeit nach jeder Spulenerregerstromumschaltung einem stationären Zustand ($B_0$) zustrebende Magnetfeld den stationären Zustand ($B_0$) noch nicht erreicht hat, und daß man die betreffenden Abtastwerte ($U_i$) zur Abschätzung der Durchflußrate des fließfähigen Mediums in dem Meßrohr (1) auswertet.

2. Verfahren nach Anspruch 1, **dadurch gekennzeichnet,** daß man in den jeweiligen Taktzeitintervallen ($\Delta T$) eingeschalteten Spulenstroms mehrere Abtastwerte ($U_i$) der Meßspannung (U(t)) in vorbestimmter zeitlicher Zuordnung zum jeweils vorausgegangenen Umschaltzeitpunkt des Spulenerregerstroms (I) aufnimmt, um die den jeweiligen Taktzeitintervallen ($\Delta T$) zugeordnete Durchflußrate des fließfähigen Mediums abzuschätzen.

3. Verfahren nach Anspruch 2, **dadurch gekennzeichnet,** daß jeder vor Erreichen des stationären Zustandes des Magnetfeldes aufgenommener Abtastwert ($U_i$) mit einem von dessen zeitlicher Zuordnung in dem betreffenden Taktzeitintervall ($\Delta T$) abhängigen Korrekturfaktor korrigiert wird, um die Abtastwerte ($U_i$) auf den Fall der Messung bei stationärem Magnetfeld zu normieren.

4. Verfahren nach Anspruch 1 oder 2, **dadurch gekennzeichnet,** daß man in den jeweiligen Taktzeitintervallen (ΔT) eingeschalteten Spulenstroms jeweils einen einzelnen Abtastwert (U) in vorbestimmter zeitlicher Zuordnung zum jeweils vorausgegangenen Umschaltzeitpunkt des Spulenerregerstroms (I) über ein Abtastintegrationszeitintervall ($T_{int}$) aufnimmt, das sich über den größten Teil des gesamten Taktzeitintervalls (ΔT) erstreckt.

5. Verfahren nach Anspruch 4, **dadurch gekennzeichnet,** daß man jeden Abtastwert (U) mit einem von dessen zeitlicher Zuordnung in dem betreffenden Taktzeitintervall (ΔT) und von der Dauer des Abtastintegrationszeitintervalls ($T_{int}$) abhängigen Korrekturfaktor (k) korrigiert, um die Abtastwerte (U) auf den Fall der ausschließlichen Messung bei stationärem Magnetfeld zu normieren.

6. Verfahren nach einem der vorhergehenden Ansprüche, **dadurch gekennzeichnet,** daß die Meßspannung (U(t)) in Zeitabständen bei stationärem Magnetfeld ($B_0$) abgetastet wird und daß die dabei ermittelten Meßspannungswerte als Kalibrierungswerte zur Überprüfung und ggf. Korrektur von Meßspannungswerten aus Zeitabschnitten ($t_a$) mit stationärem Magnetfeld verwendet werden.

7. Verfahren nach Anspruch 6, **dadurch gekennzeichnet,** daß der Spulenerregerstrom (I) mit wenigstens zwei einander abwechselnden Umschaltfrequenzen ($f_1$, $f_2$) geschaltet wird, wobei die Taktzeitintervalle ($ΔT_2$) bei einer dieser Frequenzen ($f_2$) hinreichend lang sind, um ein stationäres Magnetfeld ($B_0$) aufzubauen, und daß Kalibrierungswerte in den Taktzeitintervallen ($ΔT_2$) dieser Frequenz ($f_2$) aufgenommen werden.

8. Verfahren nach Anspruch 6, soweit letzterer auf Anspruch 4 oder 5 rückbezogen ist, **dadurch gekennzeichnet,** daß der Spulenerregerstrom (I) mit einer im wesentlichen konstanten Umschaltfrequenz geschaltet wird, wobei das Magnetfeld seinen stationären Zustand in jedem Taktzeitintervall (ΔT) erreichen kann, und daß man zur Aufnahme der Kalibrierungswerte das Abtastintegrationszeitintervall ($T_x$) auf einen ausschließlich in den Zeitbereich stationären Magnetfeldes fallenden Wert verkleinert.

9. Verfahren nach dem Oberbegriff des Anspruchs 1 oder einem der vorhergehenden Ansprüche, wobei man den Spulenstrom (I) mit wenigstens zwei verschiedenen, zeitlich einander abwechselnden Umschaltfrequenzen ($f_1$, $f_2$) schaltet und die Meßspannung (U(t)) in vorbestimmter zeitlicher Beziehung vom jeweils vorausgehenden Erregerstrom-Umschaltzeitpunkt in den Taktzeitintervallen eingeschalteten Spulenstroms abtastet, **dadurch gekennzeichnet,** daß man die Anzahl der Perioden ($2ΔT_1$, $2ΔT_2$) der einander abwechselnden Umschaltfrequenzen ($f_1$, $f_2$) in unregelmäßiger Weise variiert (Fig. 6).

10. Verfahren nach Anspruch 9, **dadurch gekennzeichnet,** daß die zeitlich einander abwechselnden Umschaltfrequenzen ($f_1$, $f_2$) keine gemeinsamen Harmonischen besitzen.

11. Verfahren nach Anspruch 9 oder 10, **dadurch gekennzeichnet,** daß man die Anzahl der jeweiligen Perioden ($2ΔT_1$, $2ΔT_2$) in den einander abwechselnden Periodenzügen der verschiedenen Umschaltfrequenzen ($f_1$, $f_2$) aus einem vorgegebenen Zahlenbereich mittels eines Zufallszahlengenerators bestimmt.

12. Verfahren nach einem der vorhergehenden Ansprüche, **dadurch gekennzeichnet,** daß man die Stromflußrichtung des Spulenerregerstroms (1) im Schalttakt der Gleichstromquelle wechselweise umkehrt und daß man die Meßspannung (U(t)) sowohl in den der einen Stromrichtung zugeordneten Zeitintervallen (ΔT) als auch in den der anderen Stromrichtung zugeordneten Taktzeitintervallen (ΔT) abtastet, um Informationen über die Durchflußrate zu gewinnen.

13. Magnetisch-induktiver Durchflußmesser zur Durchführung des Verfahrens nach einem der vorhergehenden Ansprüche, mit einem Meßrohr (1) zur Durchleitung eines fließfähigen Mediums, einer elektromagnetischen Spulenanordnung (2) zur Erzeugung eines Magnetfeldes quer zur Strömungsrichtung des fließfähigen Mediums in dem Meßrohr (1), zwei Meßelektroden (3, 3') zum Abgreifen einer aufgrund der quer zu dem Magnetfeld verlaufenden Strömung des fließfähigen Mediums induzierten Meßspannung (U(t)), einer Meßwerterfassungseinrichtung (4-22), die eine Gleichstromquelle (6) zur Bereitstellung des Erregerstroms (I) für die Spulenanordnung (2), eine den Spulenerregerstrom (I) taktende Schaltereinrichtung (8, 10), eine die Schaltereinrichtung (8, 10) steuernde Steuerschaltung (12), einen die Meßspannung (U(t)) in den Taktzeitintervallen (ΔT) eingeschalteten Spulenerregerstroms abtastenden Meßwertintegrator (20) und eine die vom Meßwertintegrator (20) aufgenommenen Meßwerte ($U_i$) zur Bestimmung der Durchflußrate auswertende Auswerteeinrichtung (12) umfaßt,
**dadurch gekennzeichnet,**
daß die Zeitsteuerschaltung (12) programmierbar ist und daß die Dauer der Abtastintegrationszeitintervalle des Meßwertintegrators (20) oder/und die zeitliche Lage der Abtastintegrationszeitintervalle relativ zu den Umschaltzeitpunkten des Spulenerregerstroms (I) unter Kontrolle der programmierbaren Zeitsteuerschaltung (12) einstellbar sind.

**14.** Magnetisch-induktiver Durchflußmesser nach Anspruch 13, **dadurch gekennzeichnet,** daß die Schaltereinrichtung (8, 10) die Stromflußrichtung des Spulenerregerstroms (I) unter Kontrolle der Zeitsteuerschaltung (12) wechselweise umschaltet.

**15.** Magnetisch-induktiver Durchflußmesser nach Anspruch 13 oder 14, **dadurch gekennzeichnet,** daß die Umschaltfrequenz der Schaltereinrichtung (8, 10) unter Kontrolle der Zeitsteuerschaltung (12) einstellbar ist.

**16.** Magnetisch-induktiver Durchflußmesser nach einem der Ansprüche 13-15, **dadurch gekennzeichnet,** daß die Zeitsteuereinrichtung (12) die Schaltereinrichtung (8, 10) mit wenigstens zwei verschiedenen, zeitlich einander abwechselnden Umschaltfrequenzen ($f_1$, $f_2$) betreibt, daß wenigstens eine dieser Umschaltfrequenzen ($f_2$) so klein ist, daß das Magnetfeld in den zugehörigen Taktzeitintervallen ($\Delta T_2$) eingeschalteten Spulenstroms einen stationären Zustand annimmt, und daß der Meßwertintegrator (20) jeweils wenigstens einen Abtastwert der Meßspannung (U(t)) in den betreffenden Taktzeitintervallen bei stationärem Magnetfeld als Kalibrierungswert für die Überprüfung und ggf. Korrektur während der Taktzyklen der betreffenden anderen Frequenz ($f_1$) aufgenommener Abtastwerte ($U_i$) durch die Auswerteeinrichtung (12) aufnimmt.

**17.** Magnetisch-induktiver Durchflußmesser nach einem der Ansprüche 13-16, **dadurch gekennzeichnet,** daß die an den Meßelektroden (3, 3') abgegriffene Meßspannung (U(t)) über einen Vorverstärker (14) und ein von der Meßwerterfassungseinrichtung kontrolliertes Filter (16) einstellbarer Grenzfrequenz an dem Meßwertintegrator (20) anliegt.

**18.** Magnetisch-induktiver Durchflußmesser nach Anspruch 17, **dadurch gekennzeichnet,** daß dem Filter (16) ein von der Meßwerterfassungseinrichtung kontrollierter Verstärker (18) mit einstellbarer Verstärkung nachgeschaltet ist.

**19.** Magnetisch-induktiver Durchflußmesser nach einem der Ansprüche 13-18, **dadurch gekennzeichnet,** daß der Meßwertintegrator (20) die Abtastwerte als digitale Meßwerte an die Auswerteeinrichtung (12) abgibt.

**20.** Magnetisch-induktiver Durchflußmesser nach einem der Ansprüche 13-19, **dadurch gekennzeichnet,** daß die Zeitsteuerschaltung (12) die Schaltereinrichtung (8, 10) mit zeitlich einander abwechselnden Periodenzügen wenigstens zweier unterschiedlicher Umschaltfrequenzen ($f_1$, $f_2$) betreibt, wobei die Anzahl der Perioden ($2\Delta T_1$, $2\Delta T_2$) in den jeweiligen Periodenzügen unregelmäßig variiert.

**21.** Magnetisch-induktiver Durchflußmesser nach Anspruch 20, **dadurch gekennzeichnet,** daß die Zeitsteuerschaltung (12) einen Zufallszahlengenerator umfaßt, der laufend die Anzahl der Perioden ($2\Delta T_1$, $2\Delta T_2$) in den jeweiligen Periodenzügen aus einem vorbestimmten Zahlenbereich nach einem Zufallsprinzip auswählt.

**22.** Magnetisch-induktiver Durchflußmesser nach Anspruch 20 oder 21, **dadurch gekennzeichnet,** daß die verschiedenen Umschaltfrequenzen ($f_1$, $f_2$) keine gemeinsamen Harmonischen aufweisen.

**23.** Magnetisch-induktiver Durchflußmesser nach einem der Ansprüche 13-22, **dadurch gekennzeichnet,** daß die Zeitsteuereinrichtung und die Auswerteeinrichtung (12) von einem Mikrocomputer gebildet sind.

_Fig.1_

_Fig.2_

Fig. 3

Fig. 4

EP 0 809 089 A2

Fig.5

Fig.6